# EUROPÄISCHE PATENTANMELDUNG

(11) **EP 0 798 907 A2**
(43) Veröffentlichungstag der Anmeldung: **01.10.1997**
(21) Anmeldenummer: 97100446.0
(22) Anmeldetag: 14.01.1997
(51) Int. Cl.: H04M 1/64

(54) **Verfahren und Anordnung zur Selektion von Anrufen**

(30) Priorität: 28.03.1996 DE 19612299
(71) Anmelder: Deutsche Telekom AG, 53113 Bonn (DE)
(72) Erfinder: Hellenthal, Georg, Dipl.-Ing., 51105 Köln (DE); Barth, Uwe, Dipl.-Ing.(FH), 64747 Breuberg (DE)

(57) **Zusammenfassung**

Bei einem Verfahren und bei einer Anordnung zur Selektion von Anrufen, die bei einem Endgerät mit automatischer Anrufannahme, insbesondere bei einem Anrufbeantworter, eintreffen, wird eine zum Endgerät übertragene Rufnummer des jeweiligen Anrufers mit gespeicherten Rufnummern verglichen. In Abhängigkeit vom Ergebnis des Vergleichs wird mindestens eine Funktion des Endgerätes aktiviert oder deaktiviert.

## Beschreibung

Die Erfindung betrifft ein Verfahren und eine Anordnung zur Selektion von Anrufen, die bei einem Endgerät mit automatischer Anrufannahme, insbesondere bei einem Anrufbeantworter, eintreffen.

Zur automatischen Annahme von Anrufen ist es beispielsweise bei Anrufbeantwortern bekannt, eine Anzahl von Rufen festzulegen, nach der der Anrufbeantworter den Anruf annimmt. Der Benutzer hat die Möglichkeit, global den Anrufbeantworter ein- bzw. auszuschalten. Im eingeschalteten Zustand haben alle Anrufer - ob gewünschte oder unerwünschte - die Möglichkeit, sich die Hinweisansage anzuhören und eine Aufzeichnung zu hinterlassen. Viele Fernsprechteilnehmer lehnen wegen dieser Globalfunktion das Einrichten eines Anrufbeantworters ab.

Aufgabe der vorliegenden Erfindung ist es, bei einem Endgerät mit automatischer Anrufannahme eine Selektion der Anrufe nach dem jeweiligen Anrufer zu ermöglichen.

Diese Aufgabe wird bei dem erfindungsgemäßen Verfahren dadurch gelöst, daß eine zum Endgerät übertragene Rufnummer des jeweiligen Anrufers mit gespeicherten Rufnummern verglichen wird und daß in Abhängigkeit vom Ergebnis des Vergleichs mindestens eine Funktion des Endgerätes aktiviert oder deaktiviert wird.

Obwohl bei dem erfindungsgemäßen Verfahren auch die Steuerung von anderen Funktionen möglich ist, ist vorzugsweise vorgesehen, daß in Abhängigkeit vom Ergebnis des Vergleichs eine Anrufannahme erfolgt.

Die Erfindung ermöglicht eine Auswahl der Anrufer, für die man jeweils erreichbar ist oder an die eine gespeicherte Nachricht übermittelt werden soll. Die Erfindung macht in vorteilhafter Weise von der Übertragung der Rufnummer des Anrufers Gebrauch. Dieses Leistungsmerkmal - auch CLIP = Calling Line Identification Presentation - ist beim ISDN bereits vorhanden und wird künftig auch in analogen Telekommunikationsnetzen angeboten werden. Es ist im wesentlichen dazu bestimmt, beim Gerufenen die Rufnummer des Anrufers anzuzeigen.

Eine vorteilhafte Ausgestaltung des erfindungsgemäßen Verfahrens besteht darin, daß die Anrufannahme nur erfolgt, wenn die übertragene Rufnummer mit einer gespeicherten für eine Anrufannahme vorgesehenen Rufnummer übereinstimmt. Hierbei kann der Benutzer Anrufer gezielt durch Speichern ihrer Rufnummern eingeben, die eine Möglichkeit haben sollen, eine Aufzeichnung auf dem Anrufbeantworter zu hinterlassen oder sich eine private Hinweisansage anzuhören. Es ist dadurch möglich, bestimmte Personengruppen, beispielsweise Familienangehörige, Freundeskreis, zu definieren und somit die Personen zu selektieren, die auf den Anrufbeantworter aufgeschaltet werden können.

Eine andere vorteilhafte Ausgestaltung des erfindungsgemäßen Verfahrens besteht darin, daß eine Anrufannahme nicht erfolgt, wenn die übertragene Rufnummer mit einer gespeicherten für eine Sperrung der Anrufannahme vorgesehenen Rufnummer übereinstimmt. Damit bleibt die Möglichkeit erhalten, daß beliebige Dritte anrufen können, während das Endgerät für unerwünschte Anrufer gesperrt ist. Bei dieser Ausgestaltung kann vorgesehen sein, daß eine Anrufannahme ferner nicht erfolgt, wenn mit dem Eintreffen des Anrufs keine Rufnummer übertragen wird.

Außer oder zusätzlich zu einer Anrufannahme kann bei dem erfindungsgemäßen Verfahren vorgesehen sein, daß in Abhängigkeit von dem Ergebnis des Vergleichs Anrufbeantworter-Funktionen gesteuert werden. Diese Funktion kann beispielsweise die Wiedergabe einer gespeicherten Nachricht oder die Aufzeichnung von übertragenen Sprachsignalen sein.

Durch diese Weiterbildung sind verschiedene Kombinationen von Funktionen möglich, die von der Rufnummer des Anrufers abhängen. So kann beispielsweise einem Teil der Anrufer die übliche Benutzung eines Anrufbeantworters gestattet sein, das heißt Abhören des Ansagetextes und Speichern einer Nachricht, während eine außerdem gespeicherte Nachricht nur für einen oder mehrere besonders definierte Anrufer möglich ist.

Eine andere vorteilhafte Ausgestaltung des erfindungsgemäßen Verfahrens besteht darin, daß in Abhängigkeit vom Ergebnis des Vergleichs eine in das Telekommunikationsnetz wirkende Funktion gesteuert wird. Vorzugsweise ist dabei vorgesehen, daß in Abhängigkeit vom Ergebnis des Vergleichs eine Anrufweiterschaltung zu einer vorgegebenen Rufnummer erfolgt.

Bei einer weiteren vorteilhaften Ausgestaltung ist vorgesehen, daß in Abhängigkeit vom Ergebnis des Vergleichs ein Signal über eine Schnittstelle des Endgerätes ausgegeben wird. Die Schnittstelle kann das Endgerät beispielsweise mit einem Computer oder mit einer anderen Einrichtung verbinden, welche die über die Schnittstelle zugeleiteten Signale interpretiert und eine gewünschte Reaktion auslöst, beispielsweise eine Signalabgabe oder eine Aufzeichnung. So kann beispielsweise durch einen Anruf von einem vorgegebenen Endgerät ein Vorgang ausgelöst werden. Ferner können Anrufe von einem vorgegebenen Endgerät registriert werden.

Bei der erfindungsgemäßen Anordnung wird die Aufgabe dadurch gelöst, daß eine Einrichtung zum Empfang und zum Vergleich der übertragenen Rufnummer mit gespeicherten Rufnummern und ein Speicher für die zu vergleichenden Rufnummern vorgesehen sind.

Bei Telefonen, Anrufbeantwortern und kombinierten Geräten sind häufig Rufnummernspeicher für Zwecke der Kurz- oder Zielwahl und als elektronisches Telefonbuch ohnehin vorhanden. Bei einer Ausbildung der erfindungsgemäßen Anordnung in Verbindung mit einem solchen Endgerät ist vorzugsweise vorgesehen, daß die zu vergleichenden Rufnummern in einem Speicher für weitere Rufnummern abgelegt und besonders gekennzeichnet werden.

Bei der erfindungsgemäßen Anordnung kann vorgesehen sein, daß von der Einrichtung zum Empfang und zum Vergleich eine Einrichtung zur Anrufannahme und/oder zur Erzeugung von Wählzeichen steuerbar ist und/oder Signale an einer Schnittstelle des Endgerätes steuerbar sind.

Das erfindungsgemäße Verfahren und die erfindungsgemäße Anordnung können außer bei Sprechverbindungen auch im Zusammenhang mit Faksimile- und Datenübertragungen angewendet werden. So kann beispielsweise ein Telefax-Gerät derart ausgebildet werden, daß Telefaxe von einem oder mehreren vorgegebenen Absendern in einen Speicher eingeschrieben werden, aus dem sie nur nach Eingabe eines Schlüsselwortes ausgelesen und ausgedruckt werden können. Auch im Zusammenhang mit Datenübertragung von und zu einem Computer sind Steuerungen möglich in Abhänggikeit davon, von wo aus die Verbindung erfolgte.

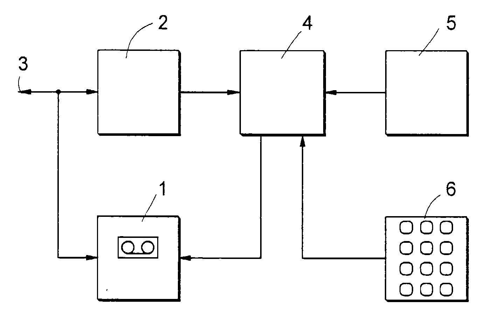

Ein Ausführungsbeispiel der Erfindung ist in der Zeichnung als Blockschaltbild dargestellt und in der nachfolgenden Beschreibung näher erläutert.

Das Blockschaltbild veranschaulicht die wesentlichen zur Durchführung des Verfahrens benötigten Komponenten. Eine erfindungsgemäße Anordnung kann jedoch auch abweichend aufgebaut sein. Insbesondere können die zur Durchführung des erfindungsgemäßen Verfahrens erforderlichen Komponenten in einen Anrufbeantworter oder in eine Telefon/Anrufbeantworter-Kombination integriert sein.

Bei 3 sind ein Anrufbeantworter 1 und eine Empfangseinrichtung 2 an ein Telekommunikationsnetz angeschlossen. Letzteres kann ein ISDN oder ein analoges Telefonnetz sein. Der Ausgang der Empfangseinrichtung 2 ist mit einer Steuereinrichtung 4 verbunden, die vorzugsweise von einem Mikroprozessor gebildet wird. Ein Speicher 5 dient zur Speicherung von über eine Tastatur 6 eingegebenen Rufnummern. Der Anrufbeantworter 1 ist von der Steuereinrichtung 4 steuerbar.

Für das erfindungsgemäße Verfahren sind sowohl Anrufbeantworter mit Magnetbandspeicherung, wie als Symbol angedeutet, oder Anrufbeantworter mit digitalen Speichern geeignet. Werden beispielsweise mit Hilfe der Tastatur 6 Rufnummern von Anrufern eingegeben, die einen Zugang zum Anrufbeantworter 1 erhalten sollen, so erteilt die Steuereinrichtung 4 bei einem über 3 eingehenden Ruf von einer der gespeicherten Rufnummern dem Anrufbeantworter 1 einen Befehl zur Gesprächsannahme. Alle anderen Anrufe bleiben unbeantwortet. In einer anderen Betriebsart ist es möglich, Rufnummern von unerwünschten Anrufern einzugeben, so daß Anrufe von allen anderen Rufnummern zu einer Anrufannahme durch den Anrufbeantworter 1 führen.

## Patentansprüche

1. Verfahren zur Selektion von Anrufen, die bei einem Endgerät mit automatischer Anrufannahme, insbesondere bei einem Anrufbeantworter, eintreffen, dadurch gekennzeichnet, daß eine zum Endgerät übertragene Rufnummer des jeweiligen Anrufers mit gespeicherten Rufnummern verglichen wird und daß in Abhängigkeit vom Ergebnis des Vergleichs mindestens eine Funktion des Endgerätes aktiviert oder deaktiviert wird.

2. Verfahren nach Anspruch 1, dadurch gekennzeichnet, daß in Abhängigkeit vom Ergebnis des Vergleichs eine Anrufannahme erfolgt.

3. Verfahren nach Anspruch 2, dadurch gekennzeichnet, daß die Anrufannahme nur erfolgt, wenn die übertragene Rufnummer mit einer gespeicherten für eine Anrufannahme vorgesehenen Rufnummer übereinstimmt.

4. Verfahren nach Anspruch 2, dadurch gekennzeichnet, daß eine Anrufannahme nicht erfolgt, wenn die übertragene Rufnummer mit einer gespeicherten für eine Sperrung der Anrufannahme vorgesehenen Rufnummer übereinstimmt.

5. Verfahren nach Anspruch 4, dadurch gekennzeichnet, daß eine Anrufannahme ferner nicht erfolgt, wenn mit dem Eintreffen des Anrufs keine Rufnummer übertragen wird.

6. Verfahren nach einem der vorhergehenden Ansprüche, dadurch gekennzeichnet, daß in Abhängigkeit von dem Ergebnis des Vergleichs Anrufbeantworter-Funktionen gesteuert werden.

7. Verfahren nach Anspruch 6, dadurch gekennzeichnet, daß die Anrufbeantworter-Funktion die Wiedergabe einer gespeicherten Nachricht ist.

8. Verfahren nach Anspruch 6, dadurch gekennzeichnet, daß die Anrufbeantworter-Funktion die Aufzeichnung von übertragenen Sprachsignalen ist.

9. Verfahren nach Anspruch 1, dadurch gekennzeichnet, daß in Abhängigkeit vom Ergebnis des Vergleichs eine in das Telekommunikationsnetz wirkende Funktion gesteuert wird.

10. Verfahren nach Anspruch 9, dadurch gekennzeichnet, daß in Abhängigkeit vom Ergebnis des Vergleichs eine Anrufweiterschaltung zu einer vorgegebenen Rufnummer erfolgt.

11. Verfahren nach Anspruch 1, dadurch gekennzeichnet, daß in Abhängigkeit vom Ergebnis des Vergleichs ein Signal über eine Schnittstelle des Endgerätes ausgegeben wird.

12. Anordnung zur Durchführung des Verfahrens nach einem der vorhergehenden Ansprüche, dadurch gekennzeichnet, daß eine Einrichtung (4) zum Empfang und zum Vergleich der übertragenen Rufnummer mit gespeicherten Rufnummern und ein Speicher (5) für die zu vergleichenden Rufnummern vorgesehen sind.

13. Anordnung nach Anspruch 12, dadurch gekennzeichnet, daß die zu vergleichenden Rufnummern in einem Speicher (5) für weitere Rufnummern abgelegt und besonders gekennzeichnet werden.

14. Anordnung nach einem der Ansprüche 12 oder 13, dadurch gekennzeichnet, daß von der Einrichtung (4) zum Empfang und zum Vergleich eine Einrichtung zur Anrufannahme steuerbar ist.

15. Anordnung nach einem der Ansprüche 12 oder 13, dadurch gekennzeichnet, daß von der Einrichtung zum Empfang und zum Vergleich eine Einrichtung zur Erzeugung von Wählzeichen steuerbar ist.

16. Anordnung nach einem der Ansprüche 12 oder 13, dadurch gekennzeichnet, daß von der Einrichtung zum Empfang und zum Vergleich Signale an einer Schnittstelle des Endgerätes steuerbar sind.
